# EUROPEAN PATENT APPLICATION

(11) **EP 4 206 777 A1**
(43) Date of publication of application: **05.07.2023**
(21) Application number: 22213585.7
(22) Date of filing: 14.12.2022
(51) Int. Cl.: G02B 7/02, G02B 3/14, G02B 26/00

(54) **OPTICAL DEVICE COMPRISING A LENS BARREL HAVING A TUNABLE LENS ALLOWING EFFICIENT ALIGNMENT OF THE TUNABLE LENS**

(30) Priority: 14.12.2021 WO PCT/IB2021/061698
(71) Applicant: Nextlens Switzerland AG, 8953 Dietikon (CH)
(72) Inventor: ASCHWANDEN, Manuel, 8953 Dietikon (CH); HAASE, Johannes, 8953 Dietikon (CH); BOSE, Frank, 8953 Dietikon (CH); SMOLKA, Stephan, 8953 Dietikon (CH); BRÄNDLE, Andreas, 8953 Dietikon (CH); BIERN, Sanggyu, 8953 Dietikon (CH)
(74) Representative: Schulz Junghans Patentanwälte PartGmbB

(57) **Abstract**

The present invention relates to an optical device (1), comprising: a tunable lens (2) having a tunable optical power, and a lens barrel (3) extending along a central axis (z), the lens barrel (3) comprising a circumferential lateral wall (30) surrounding an internal space (31) of the lens barrel (3) for accommodating the tunable lens (2), wherein the tunable lens (2) is carried by the lens barrel (3) and is at least partially arranged in the internal space (31) of the lens barrel (3) at a height (h) with respect to the central axis (z), wherein the lens barrel (2) comprises a first cross-sectional plane (A) and a second cross-sectional plane (B), said cross sectional planes (A, B) intersecting each other along the central axis (z), wherein the lens barrel (3) comprises at said height (h) of the tunable lens (2) a first diameter (D1) extending along the first cross-sectional plane (A) and a second diameter (D2) extending along the second cross-sectional plane (B), wherein the first diameter (D1) is smaller than the second diameter (D2), and wherein the lens barrel (3) comprises at least one opening (32) formed in the lateral wall (30) in [the vicinity ofJ said first cross-sectional plane (A), wherein the tunable lens (2) is arranged in the internal space (31) adjacent said at least one opening (32).

## Description

The present invention relates to an optical device as well as to a method for fabricating such an optical device.

Regarding optical devices, the challenge to integrate a tunable lens such as a liquid lens into the optical device often arises. Particularly, in a rather small system that only requires a small installation space, the need to precisely align lenses of the optical device with respect to each other can be a difficult task.

Based on the above, the problem to be solved by the present invention is to provide an optical device and a method that allow to align a tunable lens with respect to at least one other optical component and/or the lens barrel of the optical device when assembling the tunable lens and said at least one other optical component (e.g. a rigid lens) in an internal space of a lens barrel that serves to carry the tunable lens and said at least one other optical component.

This problem is solved by an optical device having the features of claim 1 as well as by a method having the features of claim 14.

Preferred embodiments of these aspects of the present invention are stated in the corresponding dependent claims and are described below.

According to claim 1 an optical device is disclosed, comprising:
- a tunable lens having a tunable optical power, and
- a lens barrel extending along a central axis, the lens barrel comprising a circumferential lateral wall surrounding an internal space of the lens barrel for accommodating the tunable lens, wherein the tunable lens is carried by the lens barrel and is at least partially arranged in the internal space of the lens barrel at a distance from an end of the lens barrel along the central axis,
- wherein the lens barrel comprises a first section forming said end, and a second section connected via a transition region to the first section, wherein said transition region is arranged at said distance,
- and wherein the lens barrel comprises at least one opening formed in the lateral wall, wherein the tunable lens is arranged adjacent said at least one opening.

The present invention thus provides a simple, yet efficient the simplest possible mechanical connection for controlling the tunable lens when the tunable lens is arranged in a lens barrel with static lenses. This is particularly difficult when the tunable lens is located midway between multiple static components. If the tunable lens is the last or first optical element in the barrel, access is less problematic.

According to an embodiment, said at least one opening is at least partially formed in the transition region of the lens barrel.

According to one embodiment, the at least one opening has the shape of a continuous slit extending from the end to the transition region. In particular, the barrel comprises multiple openings having a shape of a continuous slit extending from the end to the transition region. For example, the multiple openings are distributed evenly along the circumference of the lateral wall. The multiple openings may be distributed symmetrically with respect to the central axis. For example, the slit extends completely through the lateral wall in a direction perpendicular to the central axis. In particular, the lens barrel comprises multiple openings, wherein each opening has the shape of a continuous slit extending from the end to the transition region. In particular, the multiple openings are distributed symmetrically with respect to the central axis.

According to one embodiment, a rigid lens is arranged in the lens barrel between the end and the tunable lens. In particular, a further rigid lens arranged on a side of the tunable lens facing towards the second section. In particular the further rigid lens is arranged in the second section in the internal space of the lens barrel. In other words, along the central axis the tunable lens is arranged between the rigid lens and the further rigid lens. In particular, the rigid lens in the first section has a non-circular, in particular non-round, contour as seen in a top view along the central axis. For example, compared to a circular contour, the rigid lens has a recess, wherein the recess has the shape of a circular segment. The recess is arranged adjacent to the opening. In particular the lens barrel comprises multiple openings and the rigid lens comprises multiple recesses, wherein the recesses are adjacent to the openings respectively.

According to one embodiment, the first section comprises a first outer diameter perpendicular to the central axis, and the second section comprises a second outer diameter perpendicular to the central axis, wherein the first outer diameter (D1) is larger than the second outer diameter (D2). Thus, in other words, the lens barrel has two different diameters, wherein the tunable lens is preferably arranged in the region of a step of the lens barrel, i.e. where a transition between said diameters occurs, which allows to control the tunable lens not only from the side, but also from a direction along the central axis, particularly optical axis. Furthermore, an actuator can be placed outside the lens barrel in a section comprising the smaller diameter. In particular, the at least one opening formed in the lens barrel can also be arranged on a front surface of said step

According to a further embodiment, the transition region comprises a step of an outer surface of the lateral wall, wherein said at least one opening is at least partially formed in said step.

Advantageously, due to the at least one opening, the tunable lens is accessible when the latter is arranged in the internal space of the lens barrel as intended and thus allows controlling the tuning state of the tunable lens (e.g. its optical power) from outside the internal space in a convenient manner.

This is particularly desirable when the optical device is assembled while looking through the components and evaluating proper alignment of the components based on the imaging quality. This procedure is denoted as "optical active alignment". The present invention is particularly suitable for this procedure, since the tunable lens is accessible during assembly and therefore allows controlling of the tuning state of the tunable lens upon assembly. Furthermore, the tunable lens is also accessible after the assembly and thus allows to alter the tuning state of the tunable lens during operation of the assembled optical device in a simple and efficient manner.

The optical device can comprise - besides the tunable lens - at least one rigid lens, particularly a plurality of liquid lenses. Further, the tunable lens can be arranged between two neighbouring rigid lenses. The lens barrel can thus hold a stack of lenses, among them the tunable lens.

According to a preferred embodiment of the optical device, the optical device comprises at least one tuning element for tuning the optical power of the tunable lens, wherein said at least one opening formed in the lateral wall of the lens barrel provides access for the at least one tuning element to the tunable lens.

Further, in an embodiment, the at least one tuning element is configured to be moved along an optical axis of the tunable lens for tuning the optical power. Alternatively, or in addition, the tuning element is configured to be rotated around the optical axis of the tunable lens.

Furthermore, according to an embodiment of the optical device, the central axis of the lens barrel coincides with the optical axis of the tunable lens.

Further, in an embodiment of the optical device, the optical device comprises an actuator coupled to the at least one tuning element, the actuator being configured to move the tuning element along the optical axis, and/or rotate the tuning element around the optical axis

Further, in an embodiment, the actuator is arranged in the first cross-sectional plane facing the lateral wall of the lens barrel. Particularly, the fact that the actuator is arranged in the first cross-sectional plane means that said first cross-sectional plane intersects a portion of the actuator.

Further, according to a preferred embodiment of the optical device according to the present invention, the tunable lens comprises a container defining a volume filled with a transparent liquid, wherein the container comprises a transparent and elastically deformable membrane adjacent said liquid, and a lens shaper attached to said membrane, the lens shaper or the container being connected to the at least one tuning element for tuning the optical power of the tunable lens.

Particularly, in an embodiment, the lens shaper is an annular element. Further, in an embodiment, the lens shaper defines an optical active area of the membrane that comprises a tunable curvature that can be tuned by moving the lens shaper along the optical axis of the tunable lens which causes a corresponding change of the curvature of said area (e.g. from a less pronounced bulge to a more pronounces bulge corresponding to an increased optical power). The optical active area of the membrane may also assume a flat or even concave state. Instead of moving the lens shaper and holding the container in a fixed position, also the container may be moved while holding the lens shaper in a fixed position. Here, the container is coupled to the at least one tuning element.

Furthermore, according to an alternative embodiment, the tunable lens comprises a container defining a volume filled with a transparent liquid, wherein the container comprises a transparent and elastically deformable first membrane adjacent said liquid, an opposing transparent and elastically deformable second membrane adjacent said liquid, and a transparent plate member (as an alternative to said lens shaper) connected to the second membrane, wherein the plate member is connected to the at least one tuning element for tuning the optical power of the tunable lens.

Particularly, in an embodiment, the plate member can be a flat circular plate member. Particularly, in an embodiment, the first membrane comprises a tunable curvature that can be tuned by moving the plate member along the optical axis of the tunable lens which causes a corresponding change of said curvature (e.g. from a less pronounced bulge to a more pronounces bulge corresponding to an increased optical power). The optical active area of the membrane may also assume a flat or even concave state. Instead of connecting the plate member to the at least one tuning element and holding the container in a fixed position, the container can be moved (i.e. is connected to the at least one tuning element) while the plate member is held in a fixed position.

Furthermore, according to a further embodiment of the optical device according to the present invention, the actuator is a voice coil actuator comprising at least one magnet, particularly two opposing magnets, and a coil that surrounds the magnet(s). The respective magnet is elastically supported on the lens barrel via a spring structure, wherein the at least one tuning element is connected to the at least one magnet, particularly to a top side of the at least one magnet. In case of two opposing magnets, two tuning elements can be provided, wherein each tuning element is connected to one of the magnets, particularly to the top side of the associated magnet.

Further, according to a preferred embodiment, the container comprises a circumferential wall comprising at least one broadened section resting on the lens barrel in the vicinity of the at least one opening of the lateral wall of the lens barrel. Particularly, in case of two tuning elements, two opposing openings of the lateral wall of the lens barrel can be provided and the wall of the container can comprise two such broadened sections, each resting on the lens barrel in the vicinity of the associated opening.

According to an embodiment, the optical device is an objective, particularly an objective of a camera, particularly a mobile phone camera.

Particularly, the transparent liquid can be one of: water, oil, in particular silicone-based oil, glycerine.

Furthermore, the respective transparent and elastically deformable membrane can be made out of or comprise PDMS.

According to yet another aspect of the present invention, a method for fabricating an optical device, particularly according to the present invention, is disclosed, wherein the method comprises the steps of:
a) Arranging at least one rigid lens and a tunable lens with a tunable optical power in an internal space of a lens barrel, the internal space being surrounded by a circumferential lateral wall of the lens barrel, so that the tunable lens is arranged adjacent to at least one opening formed in the circumferential lateral wall of the lens barrel,
b) Aligning the tunable lens with respect to the rigid lens and or the lens barrel under optical feedback, wherein a retaingin element maintains a predefined tuning state of the tunable lens,
c) Operatively connecting at least one tuning element to the tunable lens, wherein the tuning element extends through the at least one opening, so that the optical power of the tunable lens is adjustable by moving the tuning element with respect to the lens barrel, and
d) Connecting the at least one tuning element to an actuator.

Here and in the following the "optical feedback" refers to a method for adjusting a parameter, wherein a test pattern is imaged by means of the rigid lens and the tunable lens, wherein the image is captured by means of a sensor. The parameter which depends on the optical feedback is selected based on the properties of the imaged test pattern, which is captured by means of the sensor. The parameter may be a relative position during the aligning in process step b) or the current applied to the actuator to achieve a dedicated tuning state by means of the actuator in method step e).

In particular, the opening(s) has/have the shape of a continuous slit extending from the end to the transition region. In particular, the barrel comprises multiple openings having a shape of a continuous slit extending from the end to the transition region. In method step c) the tuning element is inserted into the slit-shaped opening at the end of the lens barrel and then the tuning element is moved along the central axis, to attach the tuning element mechanically to the tunable lens.

The rigid lens or the multiple rigid lenses which are arranged in the first section have a recess respectively, wherein the recess is adjacent to the opening(s). Thus, in method step c) the tuning element is moved within the internal space along the central axis from the end to the tunable lens, wherein the tuning element passes through the recess(es) in the rigid lens(es).

According to one embodiment in a method step e), which is performed after method step d), the optical device is calibrated under optical feedback. During calibration a current is applied to the actuator until desired optical properties of the optical device are achieved. The optical properties are determined by means of an imaged test pattern.

Further features and advantages of the present inventions as well as embodiments of the present invention shall be described in the following with reference to the Figures, wherein
- Fig. 1: shows an embodiment of an optical device according to the present invention, wherein the left-hand side shows a top view onto a lens barrel of the optical device, the middle portion shows a cross-sectional view of the lens barrel along a first cross-sectional plane (A) and the right-hand side shows a cross-sectional view of the lens barrel along a second cross-sectional plane (B),
- Fig. 2: shows an exemplary process of stacking rigid lenses as well as a tunable lens in an internal space of the lens barrel according to Fig. 1,
- Fig. 3: shows an exemplary process of mounting the lens barrel assembled according to Fig. 2 to an actuator for tuning an optical power of the tunable lens and eventually mounting the lens barrel and actuator to an image sensor,
- Fig. 4: shows an embodiment of a tunable lens that can be used with the present invention, wherein the tunable lens comprises a container defining a volume filled with a transparent liquid, the tunable lens further comprising a lens shaper for tuning a curvature of a transparent and elastically deformable membrane of the tunable lens, wherein said membrane partially delimits said volume,
- Fig. 5: shows an alternative embodiment of a tunable lens that can be used with the present invention, wherein here, instead of the lens shaper, the tunable lens comprises a flat transparent plate member attached to a transparent and elastically deformable membrane, the container further comprising an opposing transparent and elastically deformable membrane so that a curvature of the opposing membrane can be tuned by means of the plate member in order to adjust the optical power of the tunable lens,
- Fig. 6: shows an exemplary process of arranging the tunable lens according to Fig. 4 or Fig. 5 in the internal space of the lens barrel,
- Fig. 7: shows an exemplary process of connecting at least one tuning element to the respective tunable lens being arranged in the internal space of the lens barrel,
- Figs. 8 and 9: show an exemplary embodiment of an optical device in a schematic sectional view and in a schematic top view along the optical axis, and
- Fig. 10: shows a schematic cross-sectional view of an aspect of the present invention according to which the tunable lens is replaced by a rigid lens or a rigid transparent window plate,
- Fig. 11: shows a schematic cross-sectional view of a further embodiment of the present invention, wherein the tunable lens is actuated by means of at least one magnet and a coil, and
- Fig. 12: shows a schematic top view of the embodiment of Fig. 11.

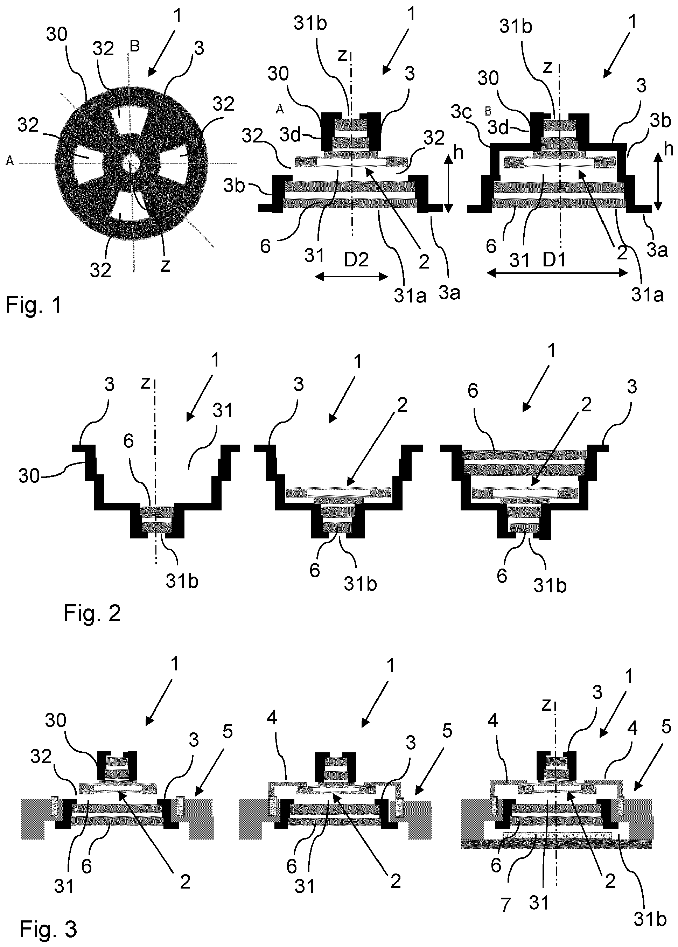

Fig. 1 shows an embodiment of an optical device 1 according to the present invention, wherein the optical device 1 comprises a tunable lens 2 having a tunable optical power, and a lens barrel 3 extending along a central axis z, the lens barrel 3 comprising a circumferential lateral wall 30 surrounding an internal space 31. The lens barrel 3 further comprises two apertures 31a, 31b that are arranged opposite one another in the direction of the central axis z and through which light can enter or exit the internal space 31 of the lens barrel 3 to pass through optical components (e.g. one or several rigid lenses 6 and the tunable lens 2) arranged in the internal space 31 of the lens barrel 3.

Particularly, the tunable lens 2 is at least partially arranged in the internal space 31 of the lens barrel 3 at a distance h from an end 3a of the lens barrel 3 along the central axis z, which end 3a is formed by a first section 3b of the lens barrel 3 that is connected via a transition region (3c) to a second section 3d of the lens barrel 3. Particularly, the second section 3d comprises the aperture 31b associated to an objective of the lens barrel 3.

Furthermore, particularly, the first section 3b comprises a first outer diameter D1 perpendicular to the central axis z, whereas the second section 3d comprises a second outer diameter D2 perpendicular to the central axis z, wherein the first outer diameter D1 is larger than the second outer diameter D2, and wherein said transition region 3c is arranged at said distance h. The lens barrel 3 comprises at least one opening 32, particularly two to four such openings 32, formed in the lateral wall 30 of the lens barrel 3, wherein the tunable lens 2 is arranged adjacent said at least one opening 32. Preferably, the transition region 3c comprises a (e.g. circumferential) step of an outer surface of the lateral wall 30, wherein said at least one opening 32 or said openings 32 is/are at least partially formed in said step as indicated in Fig. 1.

Particularly, as indicated on the left-hand side of Fig. 1, the lens barrel 3 comprises four openings 32, wherein two openings 32 are arranged opposite one another in a first cross-sectional plane A and the two other openings 32 are arranged opposite one another in a second cross-sectional plane B, said cross sectional planes A, B intersecting each other along the central axis z and extending orthogonal to one another

Preferably, due to the at least one opening 32 or said afore-described openings 32, the tunable lens 2 being arranged in the internal space 31 of the lens barrel 3 is accessible from outside the lens barrel 3 so that the tunable lens 2 can be aligned with respect to the lens barrel 3 and with respect to other components (such as at least one rigid lens 6) of the optical device 1. Preferably, due to the opening(s) 32 being at least partially formed in said transition region 3c, e.g. on the step, the tunable lens is accessible in a direction running parallel to the central axis/optical axis z.

Particularly, thus, the at least one opening 32 offers the advantage that the optical power of the tunable lens 2 can be tuned from outside the lens barrel 3 in an efficient manner. Particularly, this allows one to fix a tuning state of the tunable lens 2 (i.e. maintain a constant optical power) during alignment/assembly from outside the lens barrel 3 of the optical device 1 to assure proper active optical alignment of the tunable lens 2 with respect to the lens barrel 3 and/or at least one rigid lens 6 (or several such rigid lenses 6 that form a lens stack together with the tunable lens 2).

Furthermore, the optical device 1 can comprise, as indicated in Figs. 1 to 3 and 6 to 7 - besides the tunable lens 2 - at least one rigid lens 6, particularly a plurality of rigid lenses 6. Further, the tunable lens 2 can be arranged between two neighboring rigid lenses 6. The lens barrel 2 can thus hold a stack of lenses 6, 2, among them the tunable lens 2.

Due to the at least one opening 32 or due to plurality of such openings 32 formed in the lateral wall 30 of the lens barrel 3, the method according to the present invention allows an active optical alignment of the tunable lens 2, wherein placement and/or the tuning state of the tunable lens 2 (i.e. its optical power) can be adjusted/tuned from outside the lens barrel 3 in a convenient fashion.

Particularly, regarding the method according to the present invention, Fig. 2 shows in an exemplary fashion a placement of at least one rigid lens 6 (here e.g. two rigid lenses 6) in the internal space 31 of the lens barrel 3 adjacent the aperture 31b of the lens barrel 3 through which light can enter the lens barrel 3, wherein the lens barrel 3 can generally taper towards this aperture 31b / end of the lens barrel 3 (cf. left-hand side of Fig. 2). Thereafter, the tunable lens 2 is placed in the internal space 31 of the lens barrel 3 (cf. middle portion of Fig. 2). Furthermore, according to the right-hand side of Fig. 2, at least one further rigid lens 6 (or several further rigid lenses 6) is/are stacked on top of the tunable lens 2 in the internal space 31 of the lens barrel 3. In other words, the lenses 6, 2 are assembled in one axial assembly process in particular.

Then, the MTF (modulation transfer function) of the lens stack 6, 2 in the lens barrel 3 can be measured for different tuning states (optical powers) of the tunable lens 2 using the tuning elements 4 (not shown in Fig. 2) coupled to the tunable lens 2 to generate and maintain the respective tuning state.

Thereafter, the lens barrel 2 can be mounted to the actuator 5 (such as a voice coil motor) according to the left-hand side of Fig. 3, wherein the tuning elements 4 are now coupled to the actuator 5 (cf. middle portion of Fig. 3), wherein the respective opening 32 provided access to the tunable lens 2 in the internal space 31 of the lens barrel 3 so that the optical power of the tunable lens 2 can be tuned using the actuator 5. Now, the MTF can again be measured for different electrical currents applied to the actuator / voice coil motor 5 to calibrate the optical device 1. Thereafter, the lens barrel 3 together with the actuator 5 can be mounted to an image sensor 7 using the calibrated current (cf. right-hand side of Fig. 3) during operation of the optical device 1.

Generally, the optical device 1 can comprise at least one tuning element 4 (particularly a number of tuning elements 4 corresponding to the number of openings 32 in the lateral wall 30 of the lens barrel 3), wherein the respective tuning element 4 can be connected to the tunable lens 2 so that a force can be transferred via the respective tuning element 4 to the tunable lens 2 that allows tuning the optical power of the tunable lens 2 from outside the internal space 31 to a defined value, wherein this value can be kept constant by fixing the spatial position of the respective tuning element 4 by an appropriate tool such as a clamp that fixes the spatial position of the respective tuning element 4. After having performed the active optical alignment, the tuning elements 4 can be connected to the actual actuator 5 (cf. middle portion of Fig. 3) so that the tunable lens 2 can be actuated and its optical power altered in a defined manner during operation of the assembled optical device 1.

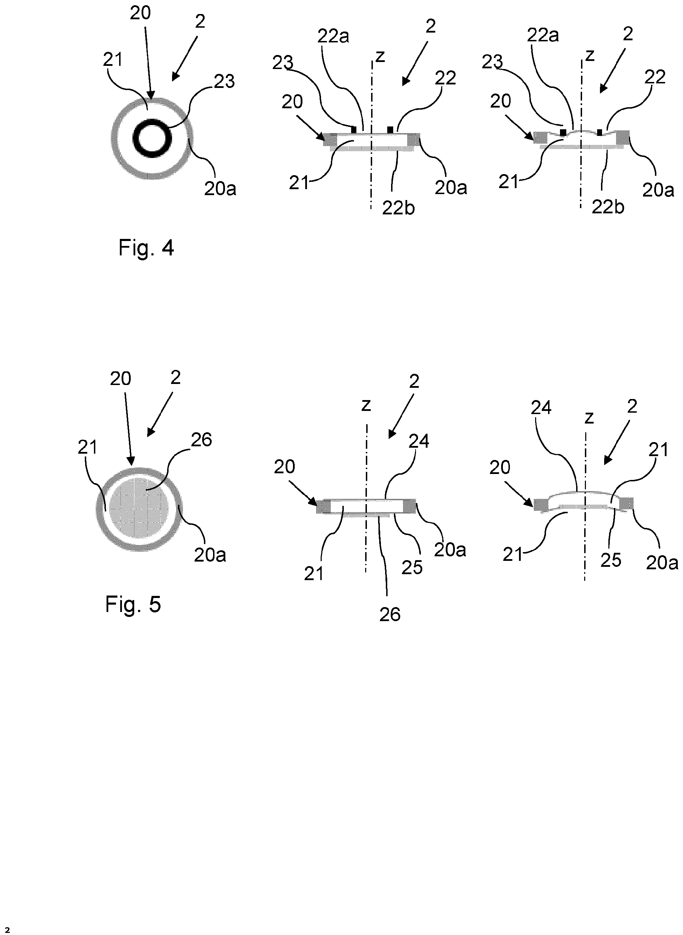

Generally, the present invention can be applied to all kinds of tunable lenses 2, particularly liquid tunable lenses 2, particularly to tunable lenses 2 as shown in Figs. 4 and 5 for example.

According to the embodiment shown in Fig. 4, the tunable lens 2 can comprise a container 20 defining a volume filled with a transparent liquid 21, wherein the container 20 comprises a transparent and elastically deformable membrane 22 adjacent said liquid 21 and a lens shaper 23 attached to said membrane 22 (cf. top view of the tunable lens 2 on the left-hand side of Fig. 4). The membrane 22 can be connected to a circumferential wall 20a of the container 20 (cf. middle portion of Fig. 4). Particularly, the lens shaper 23 is an annular element and can define an optical active area 22a of the membrane 22 that comprises an adjustable curvature that can be tuned by moving e.g. the lens shaper 23 along the optical axis z of the tunable lens 2 which causes a corresponding change of the curvature of said area 22a (e.g. from a less pronounced bulge to a more pronounced bulge corresponding to an increased optical power, cf. right-hand side of Fig. 4). Furthermore, the container 20 of the tunable lens 2 particularly comprises a transparent optical element 22b opposing the membrane 22 so that the transparent liquid 21 is arranged between the membrane 22 and the optical element 22b. The optical element 22b can be a flat glass member or any other suitable transparent optical element. The optical element 22b can also be a further transparent and elastically deformable membrane 22b.

Furthermore, Fig. 5 shows an alternative embodiment of the tunable lens 2, wherein here, the tunable lens 2 also comprises a container 20 defining a volume being filled with a transparent liquid 21 (cf. top view of the tunable lens 2 shown on the left-hand side of Fig. 5), wherein the container 20 comprises a transparent and elastically deformable first membrane 24 adjacent said liquid 21, an opposing transparent and elastically deformable second membrane 25 adjacent said liquid 21, and a transparent plate member 26 connected to the second membrane 25. The membranes 24, 25 can be connected to opposite sides of the wall 20a of the container 20 so that the liquid 21 resides between the two membranes 24, 25. Particularly, the plate member 26 can be a flat circular plate member 26 (cf. left-hand side of Fig. 5). Further, as shown in the middle portion and the right-hand side of Fig. 5, the first membrane 24 comprises an adjustable curvature that can be tuned by moving e.g. the plate member 26 along the optical axis z of the tunable lens 2 which causes a corresponding change of said curvature (e.g. from a less pronounced bulge or flat state as shown in the middle portion of Fig. 5 to a more pronounced bulge corresponding to an increased optical power as shown on the right hand-side of Fig. 5).

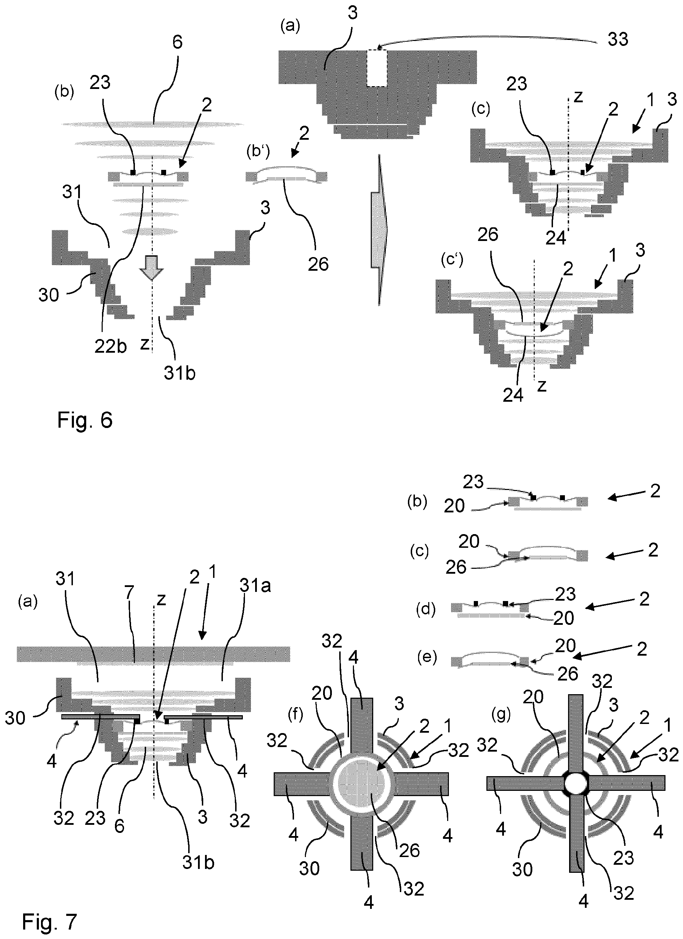

Regarding the method according to the present invention, Fig. 6 illustrates the assembly of the optical element 1 with respect to the tunable lens types shown in Figs. 4 and 5. Particularly, as shown in section (a) of Fig. 6 the lens barrel 3 can comprise a slit 33 for engagement with a grabber. When the tunable lens 2 and the rigid lens(es) are stacked on top of one another as shown in section (b) of Fig. 6 (with the lens barrel 3 being held by the grabber in particular), a tunable lens 2 comprising a lens shaper 23 according to Fig. 4 is placed into the internal space 31 with the rigid optical element 22b facing towards aperture 31b through which the barrel 3 receives light during operation. This results in the assembly shown in section (c) of Fig. 6. On the other hand, in case a tunable lens 2 as shown in Fig. 5 is used, the tunable lens 2 is inserted into the internal space 31 of the lens barrel 3 using the orientation shown in section (b') of Fig. 6, i.e. with the plate member 26 ahead and facing the aperture 31b which results in the assembly shown in section (c') of Fig. 6.

Further as shown in Fig. 7, once the lenses 6, 2 are arranged in the lens barrel 3 as intended, the tuning element(s) 4 can be coupled to the tunable lens 2 as indicated in the left-hand side (a) of Fig. 7, wherein said openings 32 in the lateral wall 30 of the lens barrel 3 are utilized and serve as access to the tunable lens 2. This can mean that at least a portion of the tunable lens 2 protrudes out of the lens barrel 3 to allow coupling to the respective tuning element 4 or that the respective tuning element 4 can engage into the respective opening 32 to reach the tunable lens 2.

Depending on the type of the tunable lens 2 being used (cf. also Figs. 4 and 5), the tuning elements 4 can be coupled to different structures of the respective tunable lens 2 to allow tuning of the optical power of the tunable lens 2.

Particularly, four configurations are conceivable which are shown in sections (b) to (e) of Fig. 7. According thereto, the respective tuning element 4 can be connected to the lens shaper 23 which is then moved relative to the fixed container 20, particularly relative to the fixed wall 20a. This is shown in section (b) of Fig. 7 as well as in section (g) of Fig. 7 showing a top view onto the tunable lens 2 and the tuning elements 4. Here, four such tunable elements 4 are particularly connected to the lens shaper 23 utilizing the access provided by the four openings 32 in the lateral wall 30 of the lens barrel 3.

Further, as shown in sections (c) and (f) of Fig. 7, the tuning elements 4 may also be connected to the container 20, particularly wall 20a, to move the container 20 relative to the fixed plate member 26. Here, as shown in section (f) of Fig. 7, four such tunable elements 4 are particularly connected to the container 20/wall 20a utilizing the access provided by the four openings 32 in the lateral wall 30 of the lens barrel 3.

Furthermore, as indicated in section (d) of Fig. 7, the tuning elements 4 may also be connected to the container 20, particularly wall 20a or optical element 22b, to move the container 20 relative to the fixed lens shaper 23.

Furthermore, as indicated in section (e) of Fig. 7, the tuning elements 4 may also be connected to the plate member 26 to move the latter relative to the fixed container 20/ wall 20a of the tunable lens 2.

Particularly, the respective fixed component is attached to the lens barrel 3 while the movable component is attached to the actuator 5 via the respective tuning element 4. Particularly, the container 20, wall 20a, optical element 22b, lens shaper 23 or plate member 26 can be fixed or moveable (tunable) as described above.

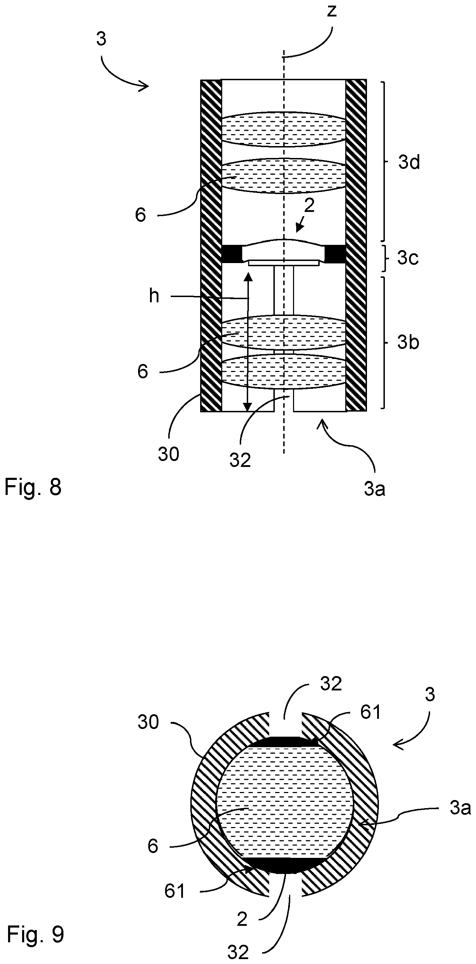

Fig. 8 shows an exemplary embodiment of an optical device in a schematic sectional view. The optical device 1, comprises the tunable lens 2 as described in connection with figure 5. Alternatively, the tunable lens 2 may be a tunable lens as described in connection with the embodiment shown in figure 4.

The optical device 1 comprises a lens barrel 3 extending along the central axis z. The lens barrel 3 comprises a circumferential lateral wall 30 surrounding the internal space 31 of the lens barrel 3 for accommodating the tunable lens 2, wherein the tunable lens 2 is carried by the lens barrel 3 and is at least partially arranged in the internal space 31 of the lens barrel 3 at a distance h from the end 3a of the lens barrel along the central axis z.

The lens barrel 3 comprises the first section 3b forming said end 3a, and the second section 3d connected via the transition region 3c to the first section 3b, wherein said transition region 3c is arranged at said distance h.

The lens barrel 3 comprises the at least one opening 32 formed in the lateral wall 30, wherein the tunable lens 2 is arranged adjacent said at least one opening 32. The at least one opening 32 is at least partially formed in the transition region 3c of the lens barrel 3. The at least one opening 32 has the shape of a continuous slit extending from the end 3a to the transition region 3c.

The tunable lens 2 is arranged between rigid lenses 6 along the central axis z. In particular, at least one rigid lens 6 is arranged in the first section 3b, at least one rigid lens 6 is arranged in the second section 3d and the tunable lens 2 is arranged in the transition section 3c between the first section 3b and the second section 3d.

Figure 9 shows the exemplary embodiment of the optical device described in connection with figure 8 in a schematic top view along the central axis z. The rigid lens 6 in the first section 3b has a non-circular, in particular non-round, contour as seen in a top view along the central axis z. Compared to a circular contour, the rigid lens 6 has a recess 61, wherein the recess 61 has the shape of a circular segment. The recess is arranged adjacent to the opening 32. In particular the lens barrel 3 comprises multiple openings 32 and the rigid lens 6 comprises multiple recesses 61, wherein the recesses 61 are adjacent to the openings 32 respectively. In particular, the recess 61 enables to access the tunable lens 2 in a direction along the central axis z within the internal space 31.

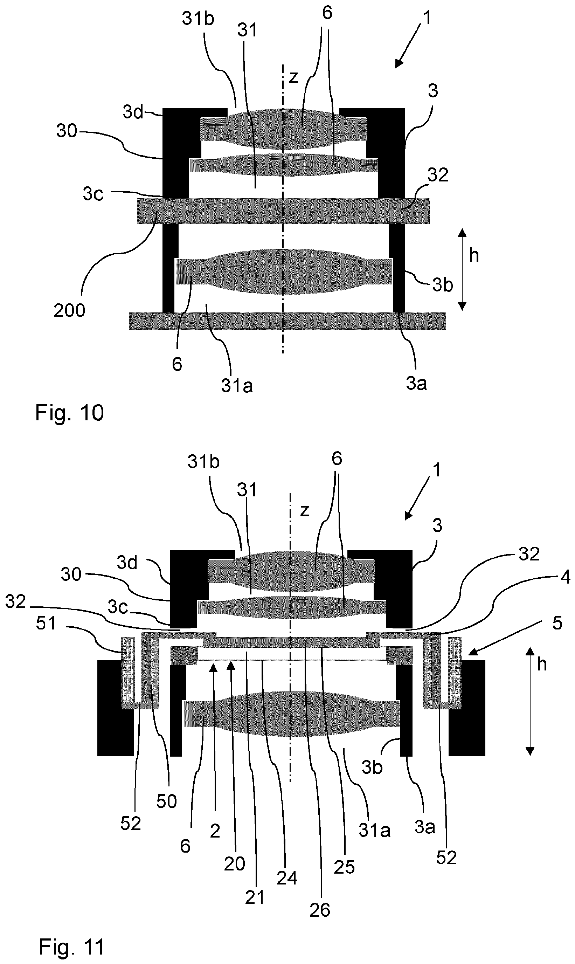

Fig. 10 shows a further aspect of the present invention, wherein here the tunable lens 2 is replaced by a rigid lens 200 or rigid optical element 200, e.g. a transparent window plate. Particularly, said rigid lens/optical element 200 can partially protrude out of the opening(s) 32 formed in the lateral wall 30 of the lens barrel 3. This means that also a rigid lens / optical element 200 can be adjusted from the outside of the lens barrel 3.

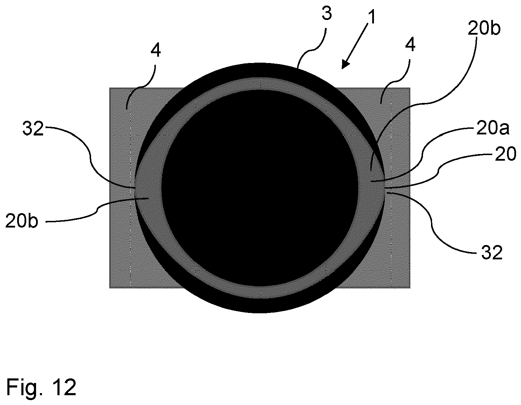

Fig. 11 shows in conjunction with Fig. 12 a further embodiment of the present invention, wherein the tunable lens 2 is actuated by an actuator 5 comprising e.g. two opposing magnets 50 or a single (e.g. circumferential) magnet 50, and a coil 51 that surrounds the two magnets 50. The magnets 50 can be elastically supported on the lens barrel 3 (e.g. via a spring structure 52). Also, the coil 51 can be mounted to the lens barrel 3. The tunable lens 2 can be actuated via two opposing tuning elements 4 that are each connected to one of the magnets 50, particularly to a top side of the respective magnet 50. Further, each tuning element 4 reaches through an associated opening 32 of the lateral wall 30 of the lens barrel 3 into the internal space 31 of the lens barrel 3.

The tunable lens 2 comprises a container 20 defining a volume being filled with a transparent liquid 21, wherein the container 20 comprises a transparent and elastically deformable first membrane 24 adjacent said liquid 21, an opposing transparent and elastically deformable second membrane 25 adjacent said liquid 21, and a transparent plate member 26 connected to the second membrane 25. The membranes 24, 25 can be connected to opposite sides of a circumferential wall 20a of the container 20 so that the liquid 21 resides between the two membranes 24, 25. Particularly, the plate member 26 can be a flat circular plate member 26. Further, the first membrane 24 comprises an adjustable curvature that can be tuned by moving e.g. the plate member 26 along the optical axis z of the tunable lens 2 which causes a corresponding change of said curvature (e.g. from a less pronounced bulge or flat state to a more pronounced bulge corresponding to an increased optical). For moving the plate member 26, the latter is connected via the tuning elements 4 to the actuator 5.

As can be seen from Figs. 11 and 12, the wall 20a of the container 20 comprises two opposing and broadened portions 20b, via which the container 20 can rest on the lens barrel 3 in the vicinity of the respective opening 32.

The present invention advantageously allows a precise alignment of optical components with a tunable lens in between which results in a high optical quality, wherein in addition a simple attachment of an actuator to the tunable lens is offered.

Particularly, the invention ensures a precise and compact alignment of all optical components of the optical system, due to the fact that all components are arranged in a common lens barrel.

The present invention is particularly suitable for optical devices in form of an objective, particularly an objective of a camera, particularly a mobile phone camera.

## Claims

1. An optical device (1), comprising:
- a tunable lens (2) having a tunable optical power, and
- a lens barrel (3) extending along a central axis (z), the lens barrel (3) comprising a circumferential lateral wall (30) surrounding an internal space (31) of the lens barrel (3) for accommodating the tunable lens (2), wherein the tunable lens (2) is carried by the lens barrel (3) and is at least partially arranged in the internal space (31) of the lens barrel (3) at a distance (h) from an end (3a) of the lens barrel along the central axis (z),
- wherein the lens barrel (3) comprises a first section (3b) forming said end (3a), and a second section (3d) connected via a transition region (3c) to the first section (3b), wherein said transition region (3c) is arranged at said distance (h),
- and wherein the lens barrel (3) comprises at least one opening (32) formed in the lateral wall (30), wherein the tunable lens (2) is arranged adjacent to said at least one opening (32).

2. The optical device according to claim 1, wherein said at least one opening is at least partially formed in the transition region of the lens barrel.

3. The optical device according to claim 1 or 2, wherein the at least one opening has the shape of a continuous slit extending from the end (3a) to the transition region (3c).

4. The optical device according to one of the preceding claims, wherein a rigid lens (6) is arranged in the lens barrel (3) between the end (3a) and the tunable lens.

5. The optical device according to one of the preceding claims, wherein the first section (3b) comprises a first outer diameter (D1) perpendicular to the central axis (z), and the second section (3d) comprises a second outer diameter (D2) perpendicular to the central axis (z), wherein the first outer diameter (D1) is larger than the second outer diameter (D2).

6. The optical device according to one of the preceding claims, wherein the tunable lens (2) is accessible via said at least one opening (32).

7. The optical device according to one of the preceding claims, wherein the optical device (1) comprises at least one tuning element (4) for tuning the optical power of the tunable lens (2), wherein the tuning element (4) extends through said at least one opening.

8. The optical device according to claim 7, wherein the tuning element (4) is configured to be moved along an optical axis (z) of the tunable lens (2) for tuning the optical power, and/or wherein the tuning element (4) is configured to be rotated around the optical axis of the tunable lens (2).

9. The optical device according to one of the claims 7 or 8, wherein the optical device (1) comprises an actuator (5) coupled to the at least one tuning element (4), the actuator (5) being configured to move the at least one tuning element (4) along the optical axis (z) and/or rotate the tuning element (4) around the optical axis, wherein the actuator (5) is optionally arranged lateral to the second section (3d) of the lens barrel (3).

10. The optical device according to claim 7 or according to one of the claims 8 to 9 insofar referring to claim 7, wherein the tunable lens (2) comprises a container (20) defining a volume filled with a transparent liquid (21), wherein the container (20) comprises a transparent and elastically deformable membrane (22) adjacent said liquid (21) and a lens shaper (23) attached to said membrane (22), wherein the lens shaper (23) or the container (20) is connected to the at least one tuning element (4) for tuning the optical power of the tunable lens (2).

11. The optical device according to claim 7 or according to one of the claims 8 to 9 insofar referring to claim 7, wherein the tunable lens (2) comprises a container (20) defining a volume filled with a transparent liquid (21), wherein the container comprises a transparent and elastically deformable first membrane (24) adjacent said liquid (21), an opposing transparent and elastically deformable second membrane (25) adjacent said liquid (21), and a transparent plate member (26) connected to the second membrane (25), wherein the plate member (26) or the container (20) is connected to the at least one tuning element (4) for tuning the optical power of the tunable lens (2).

12. The optical device according to one of the claims 9 to 11, wherein the actuator (5) is a voice coil actuator comprising at least one magnet (50) and a coil (51) that surrounds the at least one magnet (50) that is elastically supported on the lens barrel 3 via a spring structure (52), wherein the at least one tuning element (4) is connected to the at least one magnet (50).

13. The optical device according to claim 11 or 12, wherein the container (20) comprises a circumferential wall (20a) comprising at least one broadened section resting on the lens barrel (3) in the vicinity of the at least one opening (32).

14. Method for fabricating an optical device (1), particularly according to one of the preceding claims, wherein the method comprises the steps of:
a) Arranging at least one rigid lens (6) and a tunable lens (2) with a tunable optical power in an internal space (31) of a lens barrel (3), the internal space (31) being surrounded by a circumferential lateral wall (30) of the lens barrel (3), so that the tunable lens (2) is arranged adjacent to at least one opening (32) formed in the circumferential lateral wall (30) of the lens barrel (3),
b) Aligning the tunable lens with respect to the rigid lens (6) and/or the lens barrel (3) under optical feedback, wherein a retaining element maintains a predefined tuning state of the tunable lens,
c) Operatively connecting at least one tuning element (4) to the tunable lens (2), wherein the tuning element extends through the at least one opening (32), so that the optical power of the tunable lens (2) is adjustable by moving the tuning element (4) with respect to the lens barrel (3), and
d) Connecting the at least one tuning element (4) to an actuator (5).

15. Method according to claim 14, wherein in a method step e), which is performed after method step d), the optical device (1) is calibrated under optical feedback.
